# EUROPÄISCHE PATENTSCHRIFT

(11) **EP 1 151 639 B1**
(45) Veröffentlichungstag und Bekanntmachung des Hinweises auf die Patenterteilung: **06.08.2008**
(21) Anmeldenummer: 00926698.2
(22) Anmeldetag: 01.04.2000
(51) Int. Cl.: H05B 33/08

(54) **ANSTEUERSCHALTUNG FÜR LED UND ZUGEHÖRIGES BETRIEBSVERFAHREN**
CONTROL CIRCUIT FOR LED AND CORRESPONDING OPERATING METHOD
CIRCUIT DE COMMANDE POUR DEL ET PROCEDE POUR FAIRE FONCTIONNER CE CIRCUIT

(30) Priorität: 18.10.1999 DE 19950135
(43) Veröffentlichungstag der Anmeldung: 07.11.2001
(73) Patentinhaber: Patent-Treuhand-Gesellschaft für elektrische Glühlampen mbH, 81543 München (DE)
(72) Erfinder: BIEBL, Alois, D-93358 St. Johann (DE)
(86) Internationale Anmeldenummer: PCT/DE2000/000988
(87) Internationale Veröffentlichungsnummer: WO 2001/030119

(56) Entgegenhaltungen:
- EP-A- 0 216 348
- EP-A- 0 896 899
- DE-A- 19 749 333
- DE-U- 9 002 812
- DE-U- 29 900 537
- US-A- 5 598 068

## Beschreibung

### Technisches Gebiet

Die Erfindung geht aus von einer Ansteuerschaltung für LED und zugehöriges Betriebsverfahren gemäß dem Oberbegriff des Anspruchs 1. Es geht dabei insbesondere um die Reduzierung der Ansteuerverlustleistung bei Leuchtdioden (LEDs) mittels einer getakteten LED-Ansteuerschaltung.

### Stand der Technik

Bei der Ansteuerung von Leuchtdioden (LEDs) werden in der Regel Vorwiderstände zur Strombegrenzung eingesetzt, siehe beispielsweise US-A 5 907 569. Ein typischer Spannungsabfall an Leuchtdioden (U_{F}) liegt bei einigen Volt (beispielsweise ist bei Power TOPLED U_{F} = 2,1V). Der bekannte Vorwiderstand R_{V}, in Reihe zur LED (siehe Figur 1 der DE - 19930 174-A1), erzeugt besonders dann eine hohe Verlustleistung, wenn die Batteriespannung U_{Batt} hohen Spannungsschwankungen (wie im Kfz üblich) unterliegt. Der Spannungsabfall an der LED bleibt auch bei derartigen Spannungsschwankungen noch konstant, d.h. die restliche Spannung fällt am Vorwiderstand Rᵥ ab. Somit wird Rᵥ abwechselnd mehr oder weniger stark belastet. In der Praxis werden meist mehrere LEDs in Reihe (Strang) geschaltet, um eine bessere Effizienz in der Ansteuerung zu erreichen (Figur 2 der DE - 19930 174-A1). Je nach Bordnetz (12 V oder 42 V) können dementsprechend viele LEDs zu einem Strang zusammengefaßt werden. Im 12V-Bordnetz gibt es eine untere Grenze der Batteriespannung U_{Batt}, bis zu der gesetzlich vorgeschriebene Sicherheitseinrichtungen (z.B. Warnblinkanlage) funktionsfähig sein müssen. Sie beträgt 9 Volt. D.h. es können hier bis zu 4 Power TOPLEDs zu einem Strang zusammengefaßt werden (4 x 2,1V = 8,4V).

Aus dem DE 299 00537 U1 und dem DE 90 02 812 U ist jeweils eine Ansteuerschaltung für ein LED-Array bekannt, das aus mehreren Strängen von LEDs besteht. Dabei wird ein konstanter Mittelwert des LED-Stroms jeweils von einer externen festen Referenz abgeleitet.

In der DE-199 30 174-A1 ist weiterhin eine Reduzierung der Ansteuerverlustleistung bei Leuchtdioden (LEDs) mittels getakteter LED-Ansteuerung beschrieben. Bei dieser Ansteuerung der LEDs wird jeder einzelne LED-Strang für sich selbst stromgeregelt. Dies führt zu größtmöglicher Sicherheit (intelligenter LED-Treiberbaustein, siehe Figur 4 der DE-199 30 174-A1). Für die Ausleuchtung einer größeren Fläche - wie dies bei Kfz-Heckleuchten der Fall ist - wird mit dieser Technik jedoch eine größere Zahl von LED-Treiberbausteinen benötigt, was erhebliche Kosten verursacht. Die Anzahl der LED-Treiberbausteine hängt von zwei Faktoren ab:

Je kleiner die verfügbare Versorgungsspannung Uᵥ für den LED-Strang ist, desto größer ist die Anzahl der benötigten Stränge.

Je größer die Durchflußspannung U_{F} der LEDs, die für einen LED-Strang eingesetzt werden sollen, ist, desto weniger LEDs können in einem Strang eingesetzt werden.

Je mehr LED-Treiberbausteine notwendig werden, desto mehr Kosten entstehen.

Die Anforderungen, die an eine LED-Ansteuerung wie in DE-199 30 174-A1 beschrieben gestellt werden, werden natürlich aufrechterhalten, z.B. Möglichkeit der Temperaturregelung und der Fehlererkennung im LED-Strang.

### Darstellung der Erfindung

Es ist Aufgabe der vorliegenden Erfindung, eine Ansteuerschaltung für LED gemäß dem Oberbegriff des Anspruchs 1 bereitzustellen, die einfacher und damit erheblich kostengünstiger ist.

Diese Aufgabe wird durch die kennzeichnenden Merkmale des Anspruchs 1 gelöst. Besonders vorteilhafte Ausgestaltungen finden sich in den abhängigen Ansprüchen.

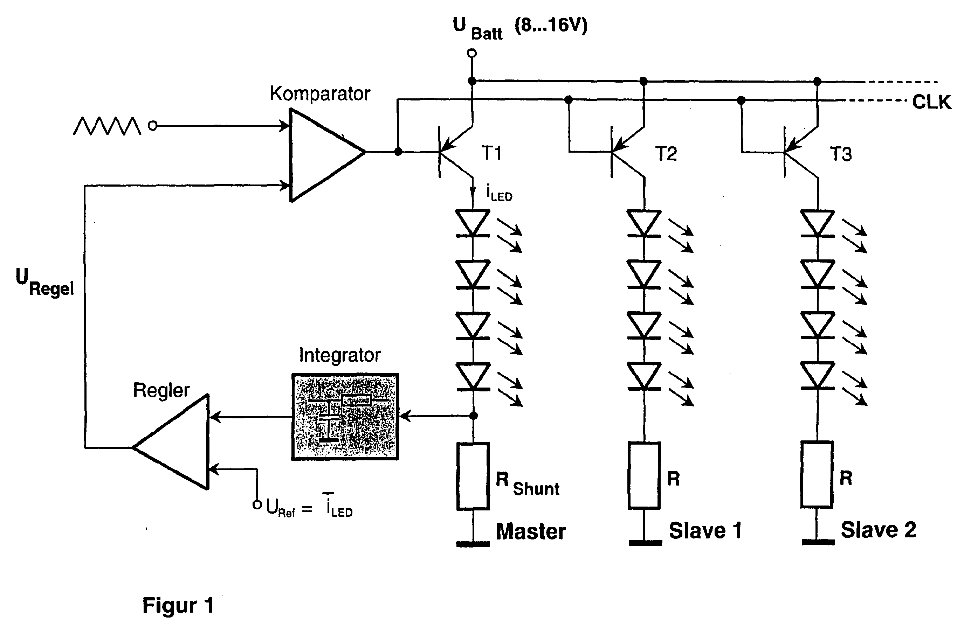

Das Grundprinzip der vorliegenden Erfindung ist eine Kaskadierung der vorbekannten Ansteuerung. Eine LED-Ansteuerung nach dem Konzept der DE-199 30 174-A1 wird dahingehend vereinfacht, daß der grundsätzliche Ansteuertakt durch die Uhr (Clock, CLK) des Transistors T1 eines ersten übergeordneten LED-Stranges, der im folgenden "Master" genannt wird, am Ausgang des Komparators des zugehörigen Regelkreises bestimmt wird und dieser Takt auch für weitere untergeordnete LED-Stränge (Slaves) zur Verfügung gestellt wird (Figur 1). Seriell zu den LEDs liegende Widerstände R_{SSn} stellen optionale zusätzliche Shuntwiderstände R_{Shunt} dar. Sie sind im Betrieb nicht unbedingt notwendig, da ihre Werte sehr klein gewählt werden (etwa R_{SS1} = 1Ω) und den eingestellten Durchlaßstrom I_{F} nicht beeinträchtigen. Wenn aber eine Unterbrechungserkennung in den Slave-Strängen stattfinden soll (s.u.), sind sie unerläßlich.

Mit diesem Konzept kann die Ausleuchtung einer beliebig großen Fläche im Prinzip mit einem einzigen Regelkreis erreicht werden. Es handelt sich hier um eine sog. Master-Slave-Stromregelung, wobei der Master-Strang den Takt (CLK) vorgibt und alle zusätzlichen LED-Stränge (Slave-Stränge) mit dem Mastertakt angesteuert werden.

In der einfachsten Ausführungsform wird nur ein Master-Strang verwendet. Diese Lösung ist besonders kostengünstig. Dabei ist allerdings vorteilhaft darauf zu achten, daß die Anzahl der LEDs in den Slave-Strängen gleich groß wie im einzigen Master-Strang ist. Ansonsten würden Unterschiede in der Helligkeit bzw. auch in der Leuchtdichte auftreten.

In einer besonders bevorzugten Ausführungsform kann die Anzahl der LEDs in den Strängen variiert werden. Dabei gibt es zwei verschiedene Ausführungsformen, um LED-Stränge anzusteuern, die eine unterschiedliche Anzahl von LEDs aufweisen (z.B. wenn die Anzahl der LEDs im Master-Strang größer ist):

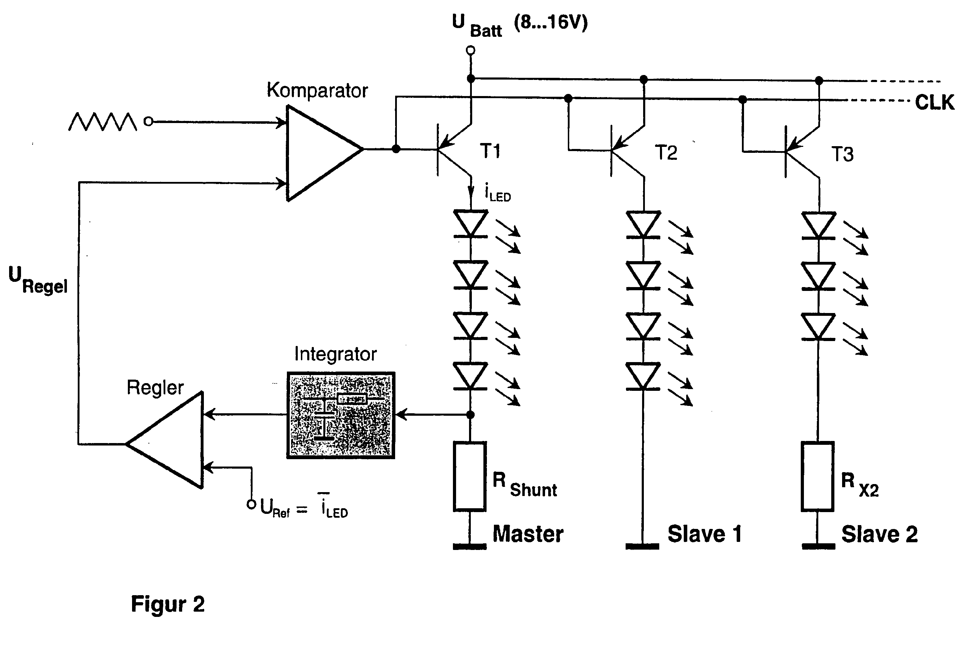

Es wird in einer ersten Variante zusätzlich jeweils ein serieller Verbraucher (Widerstand, Z-Diode, o.ä.), insbesondere ein serieller Vor-Widerstand Rₓₙ, in den n-ten Slave-Strang geschaltet, der die fehlende Leuchtdiode (bzw. Leuchtdioden) ersetzt. Dabei wird der Ansteuertakt desjenigen LED-Strangs als Master-Clock verwendet, der die größte Anzahl von Leuchtdioden treibt (Figur 2). Die Zahl der LEDs in den anderen Strängen (Slave-Stränge) kann dabei gleich groß oder kleiner gewählt werden. Vorteilhaft ist sie lediglich um bis zu 30% kleiner als die im Master-Strang, um die Verluste nicht zu groß werden zu lassen.

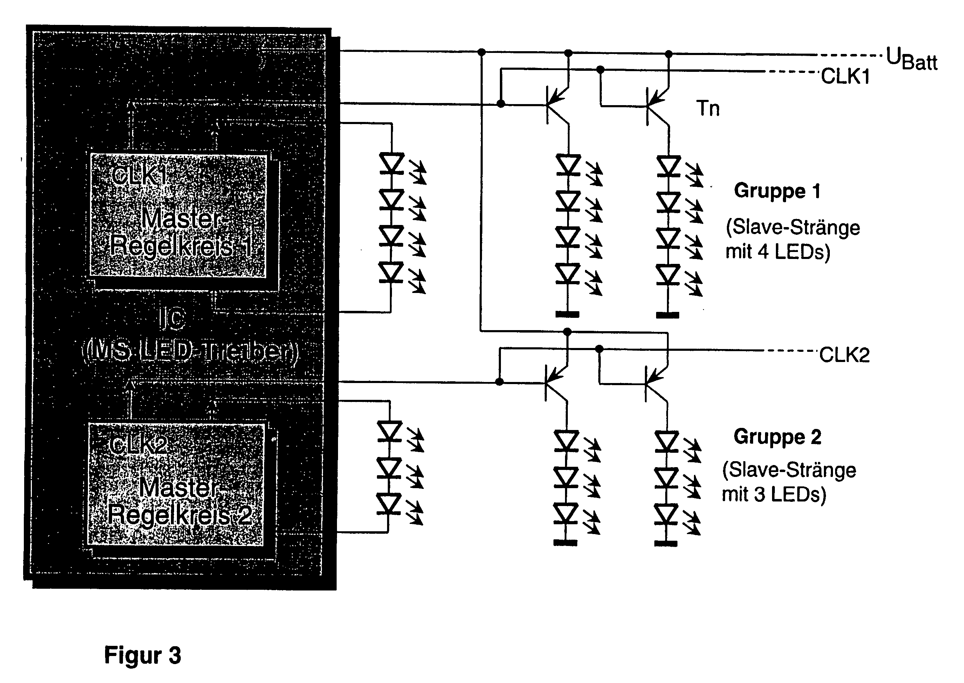

Es werden in einer zweiten Variante ein oder mehrere zusätzliche LED-Regelkreise (zweiter bzw. dritter, usw. Masterregelkreis) im LED-Ansteuerbaustein (IC) integriert, deren LED-Strang mit einer geringeren Anzahl von LEDs arbeitet als der erste Master-Strang. Die Batteriespannung U_{Batt} ist dabei mit allen Transistoren T verbunden. Der Ansteuertakt des zweiten Masterregelkreises (CLK 2) wird dann der Gruppe von Slave-Strängen mit der entsprechenden, geringeren Anzahl von LEDs zur Verfügung gestellt (Figur 3). Diese Ausführungsform eignet sich für Gruppen von LED-Strängen mit jeweils gleicher Anzahl LEDs.

Bevorzugt wird auch die Ausfallsicherheit eines Master-Stranges verbessert. Denn wenn der Master durch irgendwelche Umstände ausfällt (z.B. Unterbrechung), steht der Master-Clock für alle daran angeschlossenen Slaves nicht mehr zur Verfügung. Die Slaves werden nicht mehr angesteuert und müssen dann zum Schutz vor Zerstörung ebenfalls abgeschaltet werden.

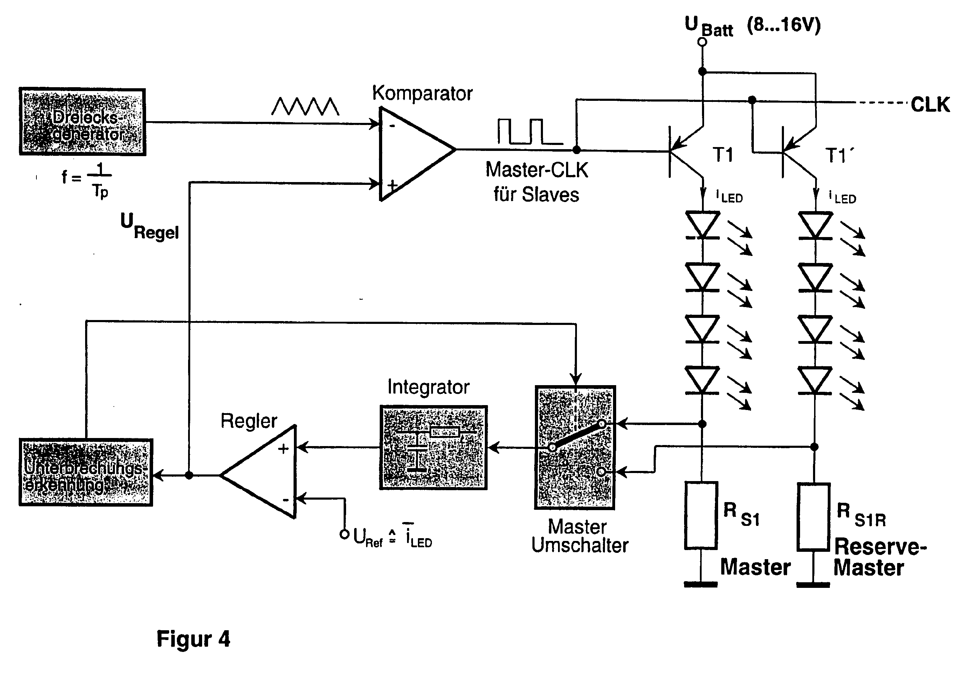

Vorteilhaft wird daher einer der Slave-Stränge als Reserve-Master-Strang ausgelegt. Dies bedeutet, daß ein Mittel zur Unterbrechungserkennung im Regelkreis des Masterstrangs vorhanden ist, das seinerseits mit einem Umschalter im Regelkreis verbunden ist, wobei der Umschalter einerseits mit dem Master-Strang, andererseits mit dem Reserve-Master-Strang, verbunden ist. Bei Ausfall des Masters wird dann auf den Reserve-Master-Strang umgeschaltet (Figur 4). Durch diese Redundanz ist sichergestellt, daß im Falle einer fehlerhaften Arbeitsweise (Unterbrechung) des Masters sofort auf den Reserve-Master umgeschaltet wird. Somit ist sichergestellt, daß die angeschlossenen Slaves (nicht gezeigt) weiterhin ihren Ansteuertakt (Master-Clock) für den Betrieb erhalten.

Bevorzugt wird der Reserve-Master als Slave genutzt, solange der Master 1 regulär arbeitet.

Bevorzugt wird auch die Fehlererkennung (Fehlfunktion) im LED-Strang verbessert. Die häufigsten Fehlerarten sind Unterbrechung und Kurzschluß. Ein Ausfall bei LEDs bedeutet immer Unterbrechung. In diesem Fall bedeutet es eine Unterbrechung im LED-Strang, d.h. zumindest eine LED ist ausgefallen.

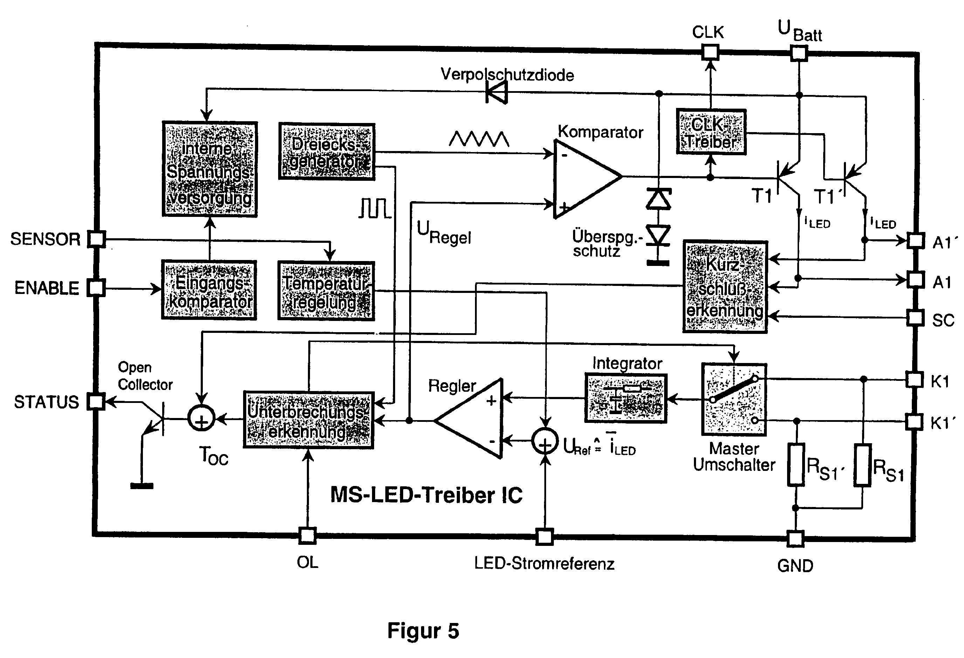

Es kann aber trotzdem ein Kurzschluß vorkommen, und zwar im Sinne der Unterbrechung der elektrischen Verbindungsleitung zwischen LED-Anode (A1) und Masse (GND), siehe Figur 5. Speziell für den Einsatz in Automobilen (z.B. eine Rückleuchte, bestehend aus LEDs) muß diese Fehlerart detektiert werden, damit dann im Fehlerfall entsprechende Gegenmaßnahmen, wie sofortiges Abschalten des LED-Treiberbausteins oder nur des kurzgeschlossenen Lastkreises (LED-Strang), eingeleitet werden können. Der Fehlerfall "Kurzschluß", kann zum Beispiel durch einen Auffahrunfall verursacht werden, bei dem die Rückleuchte beschädigt wird.

Eine Fehlererkennung in allen Strängen ist daher sehr empfehlenswert. Zu diesem Zweck sind im Treiberbaustein (IC) Detektor-Eingänge für die Slave-Stränge notwendig, und zwar bevorzugt ein erster Eingang für die Unterbrechungerkennung (Figur 5, OL) und ein zweiter Eingang für die Kurzschlußerkennung (SC in Figur 5). OL steht für "Open Load" (Unterbrechung), während SC für Short Circuit (Kurzschluß) steht.

Die Gesamtzahl der Detektor-Eingänge richtet sich nach der Zahl der Slave-Stränge, die überwacht werden sollen. Im Normalfall sind pro Slave-Strang zwei Eingänge am Baustein erforderlich.

Die grundsätzlichen Elemente einer LED-Ansteuerschaltung sind in der DE-A 199 30 174.3 beschrieben. Jetzt kommen gemäß Figur 5 Elemente für den Betrieb gemäß dem Master-Slave-Verfahren hinzu. Der Vollständigkeit halber sollen alle genannt werden:

Konstantstromregelung des Durchlaßstroms (I_{F} = const.) bei LEDs
externe und damit flexible Durchlaßstromeinstellung
kleine Verlustleistung durch Schaltbetrieb (Entfallen des großen Vorwiderstandes Rv)

Unterbrechungserkennung im LED-Strang

Kurzschlußerkennung am LED-Strang

Temperaturregelung zum Schutz der LEDs

Flexibilität bei der Ansteuerung von LEDs verschiedener Anzahl in den Strängen durch einen zweiten LED Masterregelkreis

Ansteuertaktausgang (Clockausgang) des Masters 1 und des Masters 2 für die dazugehörigen Slave-Stränge gleicher Anzahl von LEDs

Erhöhung der Sicherheit durch Master-Umschaltung

Logikansteuerung (microcontroller-kompatibler ENABLE-Eingang)
geringe Eigenstromaufnahme der Ansteuerschaltung in Betrieb und im Standby-Mode
verpolfest (in IC integriert oder extern durch Steckerkodierung realisierbar)

Überspannungsschutz
kompaktes Gehäuse (z.B. Power SO - Gehäuse für SMD-Technik)

Temperaturbereich -40°C ≤ Tⱼ ≤ 150°C
42V Kfz-Bordnetz (auch für 12V Kfz-Bordnetz realisierbar).

### Figuren

Im folgenden soll die Erfindung anhand mehrerer Ausführungsbeispiele näher erläutert werden. Es zeigen:
- Figur 1: das Grundprinzip einer getakteten Stromregelung für LED nach dem Master-Slave-Prinzip
- Figur 2: ein weiteres Ausführungsbeispiel einer Ansteuerschaltung mit unterschiedlicher Anzahl von LEDs in einzelnen Strängen
- Figur 3: ein weiteres Ausführungsbeispiel einer Ansteuerschaltung mit zwei Master-Strängen
- Figur 4: ein weiteres Ausführungsbeispiel einer Ansteuerschaltung mit Reserve-Master-Strang
- Figur 5: Prinzip eines Blockschaltbilds einer LED-Ansteuerschaltung einer getakteten Stromregelung für LED
- Figur 6: LED-Ansteuerschaltung ohne Fehlererkennung
- Figur 7: LED-Ansteuerschaltung mit kompletter Fehlererkennung

### Beschreibung der Zeichnungen

Die Figuren 1 bis 5 wurden bereits oben beschrieben.

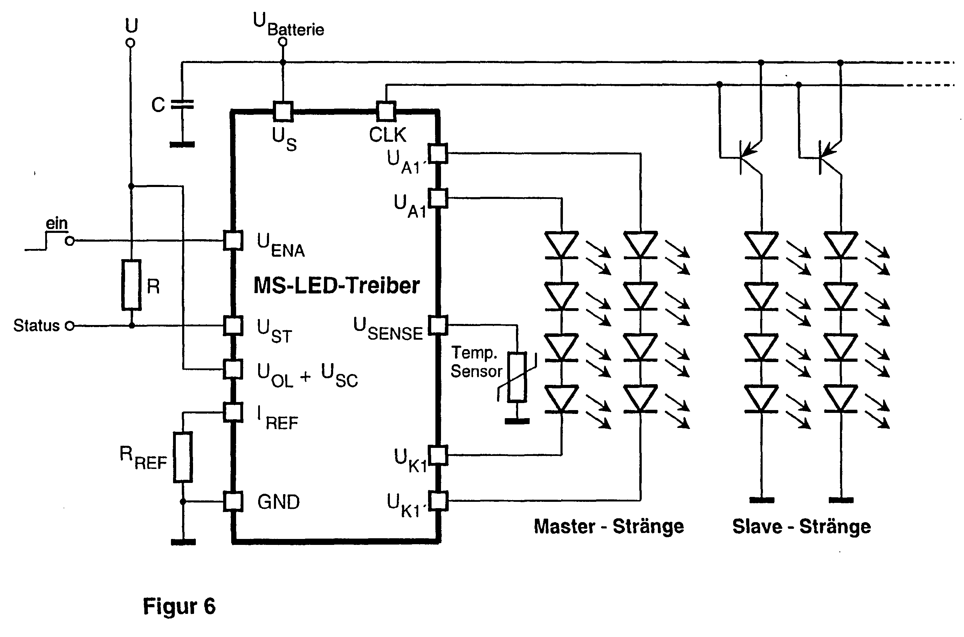

Die schematische Anwendungsschaltung in Figur 6 ist ohne Fehlererkennung für die Slave-Stränge dargestellt. Details sind in Figur 8 der DE-199 30 174 - A1 dargestellt. Die Slave-Stränge werden gruppenweise durch den dazugehörigen Master-Strang, der geregelt ist, gesteuert. Für den Fall, daß in einer Applikation auf eine Fehlererkennung verzichtet werden kann, ist bzw. sind die Detektoreingänge (OL und SC) der Slave-Stränge auf ein festes Potential (z.B. HIGH) zu legen.

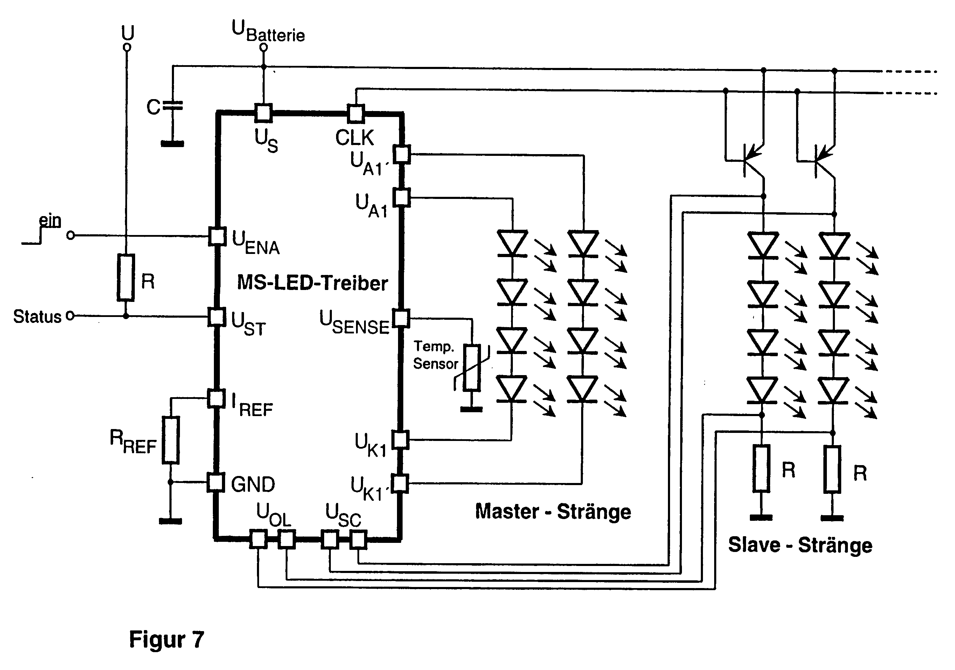

Anders hingegen bei Figur 7. Hier werden auch die Detektoreingänge OL und SC für die Fehlererkennung in den Slave-Strängen genutzt.

## Patentansprüche

1. Ansteuerschaltung für ein LED-Array, das aus mindestens zwei Strängen von LEDs besteht, wobei jeder Strang aus mehreren in Serie angeordneten LEDs besteht, die an eine Versorgungsspannung (U_{Batt}) angeschlossen sind, wobei zwischen jedem LED-Strang und der zugehörigen Versorgungsspannung (U_{Batt}) als Teil der Ansteuerschaltung jeweils ein Halbleiterschalter angeordnet ist, der es ermöglicht, den LED-Durchlass-Strom (i_{LED}) getaktet zuzuführen, wobei zumindest bei einem ersten LED-Strang, im folgenden Master-Strang genannt, zwischen LEDs und Masse, als Teil der Ansteuerschaltung ein Mittel zum Messen des Durchlass-Stroms (i_{LED}), insbesondere ein Meßwiderstand (R_{Shunt}), in Serie zum LED-Strang angeordnet ist, wobei als Teil der Ansteuerschaltung ein Regelkreis den Halbleiterschalter (T1) des Master-Strangs so regelt, dass ein konstanter Mittelwert des Durchlass-Stroms (i_{LED}) erzielt wird, indem der Regelkreis ein Integrationsglied, das den Ist-Wert des Mittelwertes des Durchlass-Stroms (i_{LED}) liefert, sowie einen daran angeschlossenen Regler, der den Ist-Wert des Mittelwertes des Durchlass-Stroms mit einem externen Sollwert (U_{ref}) vergleicht, umfasst, wobei der Regelkreis weiterhin einen Komparator umfasst, der das Signal eines Dreieckgenerators mit der Ausgangsspannung (U_{Regel}) des Reglers vergleicht, **dadurch gekennzeichnet, dass** der Master-Strang eine vorgegebene Anzahl (X) von LEDs in seinem Strang aufweist, wobei dieser Regelkreis, der eine Taktfrequenz vorgibt, auch zumindest den Halbleiterschalter (T2) eines weiteren, zweiten LED-Strangs, im folgenden als Slave-Strang bezeichnet, mit dieser Taktfrequenz ansteuert.

2. Ansteuerschaltung nach Anspruch 1, **dadurch gekennzeichnet, daß** alle zusätzlich vorhandenen LED-Stränge jeweils die gleiche Anzahl X von LEDs wie der Master-Strang aufweisen, wobei der Regelkreis des Masterstrangs alle zusätzlichen LED-Stränge mitansteuert.

3. Ansteuerschaltung nach Anspruch 1, **dadurch gekennzeichnet, daß** alle zusätzlich vorhandenen n LED-Stränge eine Anzahl Xₙ LEDs aufweisen, wobei die Zahl Xₙ = X ist, und wobei ein zusätzlicher Verbraucher, insbesondere ein Widerstand Rₓₙ, im LED-Strang in Serie zu den LEDs angeordnet ist, wenn Xₙ < X ist.

4. Ansteuerschaltung nach Anspruch 1, **dadurch gekennzeichnet, daß** mindestens zwei Gruppen von LED-Strängen, deren Anzahl LEDs unterschiedlich ist, jeweils ein Master-Strang zugeordnet ist, wobei die Anzahl X von LEDs in einer Gruppe von Slave-Strängen mit der im zugehörigen Master-Strang übereinstimmt.

5. Ansteuerschaltung nach Anspruch 1, **dadurch gekennzeichnet, daß** einer der Slave-Stränge als Reserve-Master-Strang ausgelegt ist, indem ein Mittel zur Unterbrechungserkennung im Regelkreis des Master-Strangs vorhanden ist, das seinerseits mit einem Umschalter im Regelkreis verbunden ist, wobei der Umschalter einerseits mit dem Master-Strang, andererseits mit dem Reserve-Master-Strang, verbunden ist und dazu geeignet ist, bei Unterbrechung im Master-Strang auf den Reserve-Master-Strang umzuschalten.

6. Ansteuerschaltung nach Anspruch 1, **dadurch gekennzeichnet, daß** jeder Strang (Master- und Slavestrang) zusätzlich Mittel zur Fehlererkennung umfaßt.

7. Verfahren zum Betreiben einer Ansteuerschaltung für ein LED-Array, das aus mindestens zwei Strängen von LEDs besteht, wobei jeder Strang aus mehreren in Serie angeordneten LEDs besteht, die an eine Versorgungsspannung (U_{Batt}) angeschlossen sind, wobei zwischen jedem LED-Strang und der zugehörigen Versorgungsspannung (U_{Batt}) als Teil der Ansteuerschaltung jeweils ein Halbleiterschalter angeordnet ist, der es ermöglicht, den LED-Durchlass-Strom (i_{LED}) getaktet zuzuführen, wobei zumindest bei einem ersten LED-Strang, im folgenden Master-Strang genannt, zwischen LEDs und Masse, als Teil der Ansteuerschaltung ein Mittel zum Messen des Durchlass-Stroms (i_{LED}), insbesondere ein Meßwiderstand (R_{Shunt}), in Serie zum LED-Strang angeordnet ist, wobei als Teil der Ansteuerschaltung ein Regelkreis den Halbleiterschalter (T1) des Master-Strangs so regelt, dass ein konstanter Mittelwert des Durchlass-Stroms (i_{LED}) erzielt wird, indem der Regelkreis ein Integrationsglied, das den Ist-Wert des Mittelwertes des Durchlass-Stroms (i_{LED}) liefert, sowie einen daran angeschlossenen Regler, der den Ist-Wert des Mittelwertes des Durchlass-Stroms mit einem externen Sollwert (U_{ref}) vergleicht, umfasst, wobei der Regelkreis weiterhin einen Komparator umfasst, der das Signal eines Dreieckgenerators mit der Ausgangsspannung (U_{Regel}) des Reglers vergleicht, wobei der Master-Strang eine vorgegebene Anzahl (X) von LEDs in seinem Strang aufweist, **dadurch gekennzeichnet, dass** dieser Regelkreis, der eine Taktfrequenz vorgibt, auch zumindest den Halbleiterschalter (T2) eines weiteren, zweiten LED-Strangs, im folgenden als Slave-Strang bezeichnet, mit dieser Taktfrequenz ansteuert.

## Claims

1. Drive circuit for an LED array, which comprises at least two clusters of LEDs, with each cluster comprising a plurality of LEDs which are arranged in series and are connected to a supply voltage (U_{Batt}), with a semiconductor switch in each case being arranged between each LED cluster and the associated supply voltage (U_{Batt}) as part of the drive circuit, which semiconductor switch allows the forward-biased LED current (i_{LED}) to be supplied in a pulsed manner, with a means for measurement of the forward-biased current (i_{LED}), in particular a measurement resistor (r_{Shunt}), being arranged in series with the LED cluster between the LEDs and earth, as part of the drive circuit, at least in a first LED cluster, referred to in the following text as the master cluster, with a control loop controlling the semiconductor switch (T1) in the master cluster as part of the driver circuit so as to achieve a constant mean value of the forward-biased current (i_{LED}), in that the control loop has an integration element, which produces the actual mean value of the forward-biased current (i_{LED}), and a regulator which is connected to it and compares the actual value of the mean value of the forward-biased current with an external nominal value (U_{ref}), and with the control loop also having a comparator which compares the signal from a triangular-waveform generator with the output voltage (U_{reg}) from the regulator, **characterized in that** the master cluster has a predetermined number (X) of LEDs in its cluster, with this control loop, which predetermines a clock frequency, also using this clock frequency to drive at least the semiconductor switch (T2) in a further, second LED cluster, which is referred to in the following text as a slave cluster.

2. Drive circuit according to Claim 1, **characterized in that** all the LED clusters which are additionally present each have the same number X of LEDs as the master cluster, with the control loop of the master cluster also driving all the additional LED clusters.

3. Drive circuit according to Claim 1, **characterized in that** all the n LED clusters which are additionally present have a number Xₙ of LEDs, with the number Xₙ being equal to X, and with an additional load, in particular a resistor Rₓₙ, being arranged in series with the LEDs in the LED cluster, when Xₙ < X.

4. Drive circuit according to Claim 1, **characterized in that** at least two groups of LED clusters whose numbers of LEDs differ each have an associated master cluster, with the number X of LEDs in a group of slave clusters matching the number in the associated master cluster.

5. Drive circuit according to Claim 1, **characterized in that** one of the slave clusters is in the form of a reserve master cluster, **in that** a means is provided for identifying an interruption in the control loop of the master cluster and this means, for its part, is connected to a changeover switch in the control loop, with the changeover switch being connected on the one hand to the master cluster and on the other hand to the reserve master cluster, and being suitable for switching to the reserve master cluster if an interruption occurs in the master cluster.

6. Drive circuit according to Claim 1, **characterized in that** each cluster (master and slave cluster) also has means for fault identification.

7. Method for operating a drive circuit for an LED array which comprises at least two clusters of LEDs, with each cluster comprising a plurality of LEDs which are arranged in series and are connected to a supply voltage (U_{Batt}), with a semiconductor switch in each case being arranged between each LED cluster and the associated supply voltage (U_{Batt}) as part of the drive circuit, which semiconductor switch allows the forward-biased LED current (i_{LED}) to be supplied in a pulsed manner, with a means for measurement of the forward-biased current (i_{LED}), in particular a measurement resistor (r_{Shunt}), being arranged in series with the LED cluster between the LEDs and earth, as part of the drive circuit, at least in a first LED cluster, referred to in the following text as the master cluster, with a control loop controlling the semiconductor switch (T1) in the master cluster as part of the driver circuit so as to achieve a constant mean value of the forward-biased current (i_{LED}), in that the control loop has an integration element, which produces the actual mean value of the forward-biased current (i_{LED}), and a regulator which is connected to it and compares the actual value of the mean value of the forward-biased current with an external nominal value (U_{ref}), and with the control loop also having a comparator which compares the signal from a triangular-waveform generator with the output voltage (U_{reg}) from the regulator, with the master cluster having a predetermined number (X) of LEDs in its cluster, **characterized in that** this control loop, which predetermines a clock frequency, also uses this clock frequency to drive at least the semiconductor switch (T2) in a further, second LED cluster, which is referred to in the following text as a slave cluster.

## Revendications

1. Circuit de commande d'une matrice de DEL, constituée d'au moins deux lignes de DEL, chaque ligne étant constituée de plusieurs DEL montés en série, auxquels est appliquée une tension ( U_{Batt} ) d'alimentation, dans lequel il est monté entre chaque ligne de DEL et la tension ( U_{Batt} ) d'alimentation associée, en tant que partie du circuit de commande, respectivement un commutateur à semi-conducteur qui permet d'envoyer de façon cadencée le courant ( i_{LED} ) à l'état passant de DEL, dans lequel, au moins pour une première ligne de DEL, dénommée dans ce qui suit ligne maître, il est monté entre les DEL et la masse, en tant que partie du circuit de commande, un moyen de mesure du courant ( i_{LED} ) à l'état passant, notamment une résistance ( R_{Shunt} ) de mesure en série avec la ligne de DEL, un circuit de régulation faisant partie du circuit de commande réglant le commutateur ( T1 ) à semi-conducteur de la ligne maître, de façon à obtenir une valeur moyenne constante du courant ( i_{LED} ) à l'état passant par le fait que le circuit de régulation comprend un élément d'intégration qui fournit la valeur réelle de la valeur moyenne du courant ( i_{LED} ) à l'état passant, ainsi qu'un régulateur qui y est raccordé et qui compare la valeur réelle de la valeur moyenne du courant à l'état passant à une valeur ( U_{ref} ) de consigne extérieure, le circuit de régulation comprenant en outre un comparateur qui compare le signal d'un générateur en triangle à la tension ( U_{Regel} ) de sortie du régulateur, **caractérisé en ce que** la ligne maître a un nombre ( X ) prescrit de DEL dans sa ligne, ce circuit de régulation, qui prescrit une fréquence d'horloge, commandant aussi au moins le commutateur ( T2 ) à semi-conducteur d'une autre deuxième ligne de DEL, désignée dans ce qui suit ligne esclave, par cette fréquence d'horloge.

2. Circuit de commande suivant la revendication 1, **caractérisé en ce que** toutes les lignes de DEL présentes supplémentairement ont respectivement le même nombre X de DEL que la ligne maître, le circuit de régulation de la ligne maître commandant en même temps toutes les lignes de DEL supplémentaires.

3. Circuit de commande suivant la revendication 1, **caractérisé en ce que** toutes les lignes n de DEL présentes supplémentairement ont un nombre Xₙ de DEL, le nombre Xₙ étant égal à X, et un consommateur supplémentaire, notamment une résistance Rₓₙ, étant monté dans la ligne de DEL en série avec les DEL lorsque Xₙ < X.

4. Circuit de commande suivant la revendication 1, **caractérisé en ce qu'**il est associé à au moins deux groupes de lignes de DEL, dont le nombre de DEL est différent, respectivement une ligne maître, le nombre X de DEL dans un groupe de lignes esclaves coïncidant avec celui dans la ligne maître associée.

5. Circuit de commande suivant la revendication 1, **caractérisé en ce que** l'une des lignes esclaves est conçue comme ligne maître de réserve par le fait qu'il y a un moyen pour détecter l'interruption dans le circuit de régulation de la ligne maître qui, pour sa part, est reliée par un commutateur dans le circuit de régulation, le commutateur étant relié, d'une part, à la ligne maître, d'autre part, à la ligne maître de réserve et étant propre ainsi, lorsque la ligne maître est interrompue, à commuter sur la ligne maître de réserve.

6. Circuit de commande suivant la revendication 1, **caractérisé en ce que** chaque ligne ( ligne maître et ligne esclave ) comprend supplémentairement des moyens de détection d'erreur.

7. Procédé pour faire fonctionner un circuit de commande d'une matrice de DEL constituée d'au moins deux lignes de DEL, chaque ligne étant constituée de plusieurs DEL montés en série auxquels est appliquée une tension ( U_{Batt} ) d'alimentation, dans lequel il est monté, entre chaque ligne de DEL et la tension ( U_{Batt} ) d'alimentation associée, en tant que partie du circuit de commande, respectivement un commutateur à semi-conducteur qui permet d'envoyer de manière cadencée le courant ( i_{LED} ) à l'état passant de DEL au moins pour une première ligne de DEL dénommée dans ce qui suit ligne maître, il est monté entre les DEL et la masse, en tant que partie du circuit de commande, un moyen de mesure du courant ( i_{LED} ) l'état passant, notamment une résistance ( R_{Shunt} ) de mesure, en série avec la ligne de DEL, un circuit de régulation en tant que partie du circuit de commande régulant le commutateur ( T1 ) à semi-conducteur de la ligne maître, de manière à obtenir une valeur moyenne constante du courant ( i_{LED} ) à l'état passant par le fait que le circuit de régulation comprend un élément d'intégration qui fournit la valeur réelle de la valeur moyenne du courant ( i_{LED} ) à l'état passant, ainsi qu'un régulateur qui y est raccordé et qui compare la valeur réelle de la valeur moyenne du courant à l'état passant à une valeur ( U_{ref} ) de consigne extérieure, le circuit de régulation comprenant en outre un comparateur qui compare le signal d'un générateur en triangle à la tension ( U_{Regel} ) de sortie du régulateur, la ligne maître ayant un nombre ( X ) prescrit de DEL dans sa ligne, **caractérisé en ce que** ce circuit de régulation qui prescrit une fréquence d'horloge commande aussi au moins le commutateur ( T2 ) à semi-conducteur d'une autre deuxième ligne de DEL, désignée dans ce qui suit par ligne esclave, à cette fréquence d'horloge.
